# EUROPEAN PATENT APPLICATION

(11) **EP 4 631 667 A1**
(43) Date of publication of application: **15.10.2025**
(21) Application number: 24781351.2
(22) Date of filing: 14.03.2024
(51) Int. Cl.: B23K 26/362, B23K 26/08, H01M 4/04, B23K 101/36

(54) **LASER NOTCHING DEVICE FOR ELECTRODE SHEET AND METHOD FOR NOTCHING ELECTRODE SHEET USING SAME**

(30) Priority: 24.03.2023 KR 20230038577
(71) Applicant: LG Energy Solution, Ltd., Seoul 07335 (KR)
(72) Inventor: KIM, Gil Woo, Daejeon 34122 (KR); KIM, Tae Su, Daejeon 34122 (KR); PARK, Dong Hyeuk, Daejeon 34122 (KR); LEE, Seo Jun, Daejeon 34122 (KR); LEE, Byung Hee, Daejeon 34122 (KR)
(74) Representative: Plasseraud IP
(86) International application number: PCT/KR2024/095511
(87) International publication number: WO 2024/205362

(57) **Abstract**

Disclosed are a laser notching apparatus for electrode sheets and a method for notching electrode sheet using the same, and more particularly a laser notching apparatus for electrode sheets, the laser notching apparatus including an unwinder having an electrode sheet wound therearound, a notching drum spaced apart from the unwinder by a predetermined distance, the notching drum being configured to support the electrode sheet that is supplied, a laser radiator configured to notch the electrode sheet, and a rewinder spaced apart from the notching drum by a predetermined distance, the rewinder being configured to wind the notched electrode sheet, wherein the electrode sheet wound around the unwinder includes a first surface constituting an inner surface and a second surface constituting an outer surface, and the notching drum is disposed so as to face the first surface of the electrode sheet, and a method for notching electrode sheet using the same.

## Description

### [Technical Field]

This application claims the benefit of priority to Korean Patent Application No. 2023-0038577 filed on March 24, 2023, the disclosure of which is incorporated herein by reference in its entirety.

The present invention relates to a laser notching apparatus for electrode sheets and a method for notching electrode sheet using the same, and more particularly to a laser notching apparatus for electrode sheets that determines disposition of a laser radiator configured to notch an electrode sheet and a notching drum based on light reflectivity and curvature of the electrode sheet and a method for notching electrode sheet using the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

A secondary battery may comprise a stacked type electrode assembly configured such that flat electrode plates each having an electrode tab protruding from an outer periphery of at least one side thereof are stacked in the state in which a separator is interposed therebetween.

A press notching process or a laser notching process is used as a notching process for forming an electrode tab on an electrode sheet in order to manufacture each of the flat electrode plates.

In the laser notching process, notching quality may be affected by the orientation of a laser radiator and a notching drum with respect to an outer surface of the electrode sheet, the position and orientation of an unwinder having the electrode sheet wound therearound, etc.

Poor notching quality may cause problems such as poor notch dimensions, tab folding, and non-cutting of the electrode sheet, whereby the yield of secondary batteries may be reduced.

Furthermore, if the laser radiator is located above the notched electrode sheet in the same direction as the movement direction of the electrode sheet, contamination due to debris generated during the notching process may occur.

In this regard, Patent Document 1 discloses an apparatus for removing debris generated during notching of a secondary battery, wherein the apparatus includes a debris checking unit configured to capture an image of an upper surface and a lower surface of a notched electrode pattern on a transfer path of an electrode film that has undergone a notching process and to calculate the position of debris present in the electrode pattern based on the captured image and a debris removal unit configured to blow air to the position of the debris and to apply vacuum pressure based on information about the position of the debris calculated by the debris checking unit.

Patent Document 1 discloses technology capable of removing debris generated during the notching process to prevent short circuit in the secondary battery, but does not solve the problem of poor quality occurring during the notching process.

Consequently, there is a need for technology capable of preventing notching defects during a notching process to form an electrode tab, thereby minimizing a decrease in the yield of secondary batteries.

### (Prior Art Document)

(Patent Document 1) Korean Patent Application Publication No. 2022-0142148 (2022.10.21)

### [Disclosure]

### [Technical Problem]

The present invention has been made in view of the above problems, and it is an object of the present invention to provide a laser notching apparatus for electrode sheets capable of inhibiting defects of an electrode sheet occurring during a notching process and a method for notching electrode sheet using the same.

### [Technical Solution]

A laser notching apparatus for electrode sheets according to the present invention to accomplish the above object includes an unwinder (100) having an electrode sheet (10) wound therearound, a notching drum (200) spaced apart from the unwinder (100) by a predetermined distance, the notching drum being configured to support the electrode sheet (10) that is supplied, a laser radiator (300) configured to notch the electrode sheet (10), and a rewinder

(400) spaced apart from the notching drum (200) by a predetermined distance, the rewinder (400) being configured to wind the notched electrode sheet (10), wherein the electrode sheet (10) wound around the unwinder (100) includes a first surface (10a) constituting an inner surface and a second surface (10b) constituting an outer surface, and the notching drum (200) is disposed so as to face the first surface (10a) of the electrode sheet (10).

Also, in the laser notching apparatus for electrode sheets according to the present invention, the first surface (10a) and the second surface (10b) of the electrode sheet (10) may have different light reflectivities, and a light reflectivity of the second surface (10b) may be lower than a light reflectivity of the first surface (10a).

Also, in the laser notching apparatus for electrode sheets according to the present invention, the laser radiator (300) may be located between the unwinder (100) and the notching drum (200).

Also, the laser notching apparatus for electrode sheets according to the present invention may further include a guide roller (500) configured to change a movement direction of the supplied electrode sheet (10), wherein the guide roller (500) may include a first guide roller (510) and a second guide roller (520), and the first and second guide rollers are located between the unwinder (100) and the notching drum (200).

Also, in the laser notching apparatus for electrode sheets according to the present invention, the first guide roller (510) and the second guide roller (520) may be located higher than the unwinder (100) and the notching drum

(200).

Also, in the laser notching apparatus for electrode sheets according to the present invention, the first guide roller (510) and the second guide roller (520) may face the second surface (10b) of the electrode sheet (10).

Also, in the laser notching apparatus for electrode sheets according to the present invention, the guide roller (500) may include a third guide roller (530) located under the notching drum (200).

Also, in the laser notching apparatus for electrode sheets according to the present invention, the rewinder (400) may be located behind the third guide roller (530).

Also, in the laser notching apparatus for electrode sheets according to the present invention, the third guide roller (530) may face the first surface (10a) of the electrode sheet (10).

In addition, a method for laser notching electrode sheets according to the present invention includes a first step of supplying an electrode sheet (10) wound around an unwinder (100) to a notching drum (200), a second step of radiating a laser beam toward the electrode sheet (10) in contact with the notching drum (200) to notch the electrode sheet (10), and a third step of winding the notched electrode sheet (10), wherein the electrode sheet (10) wound around the unwinder (100) comprises a first surface (10a) constituting an inner surface and a second surface (10b) constituting an outer surface, and the notching drum (200) may face the first surface of the electrode sheet.

Also, in the method for laser notching electrode sheets according to the present invention, in the second step, the laser beam may be radiated toward the second surface (10b) of the electrode sheet (10), and the first surface (10a) and the second surface (10b) of the electrode sheet (10) may have different light reflectivities, the light reflectivity of the second surface (10b) being lower than the light reflectivity of the first surface (10a).

Also, the method for laser notching electrode sheets according to the present invention may further include a first movement direction change step of changing a movement direction of the supplied electrode sheet (10) between the first step and the second step, wherein the first movement direction change step may be performed by a first guide roller (510) and a second guide roller (520) located between the unwinder (100) and the notching drum (200), and the first guide roller (510) and the second guide roller (520) may be rotated so as to face the second surface (10b) of the electrode sheet (10).

Also, the method for laser notching electrode sheets according to the present invention may further include a second movement direction change step of changing a movement direction of the notched electrode sheet (10) between the second step and the third step, wherein the second movement direction change step may be performed by a third guide roller (530) located behind the notching drum (200), and the third guide roller (530) may be rotated so as to face the first surface (10a) of the electrode sheet (10).

In addition, the present invention may provide various combinations of the above solving means.

### [Advantageous Effects]

As is apparent from the above description, in a laser notching apparatus for electrode sheets according to the present invention and a method for notching electrode sheet using the same, an electrode tab is formed using a laser radiator, whereby it is possible to prevent problems such as poor notching dimensions and tab folding.

Also, in the laser notching apparatus for electrode sheets and the method for notching electrode sheet using the same, the laser radiator radiates a laser beam toward a surface having low light reflectivity, which is one of opposite surfaces of the electrode sheet, whereby it is possible to reduce defects such as non-cutting.

Also, in the laser notching apparatus for electrode sheets and the method for notching electrode sheet using the same, the movement direction of a notched electrode sheet is the same as the direction opposite the direction in which the laser radiator is disposed, whereby it is possible to prevent debris generated during the notching process from contaminating the notched electrode sheet.

Furthermore, in the laser notching apparatus for electrode sheets and the method for notching electrode sheet using the same, an inner surface of an electrode sheet wound around an unwinder faces a notching drum, whereby adhesion between the notching drum and the electrode sheet is excellent, and therefore it is possible to reduce defects such as non-cutting.

### [Description of Drawings]

FIG. 1 is a sectional view of a laser notching apparatus for electrode sheets according to the present invention.
FIG. 2 is an enlarged perspective view of a notching drum and a laser radiator in the laser notching apparatus for electrode sheets shown in FIG. 1.
FIG. 3 is a perspective view illustrating an electrode sheet facing an unwinder and the notching drum in the laser notching apparatus for electrode sheets shown in FIG. 1.
FIG. 4 is a flowchart of a method for notching electrode sheet according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Hereinafter, a laser notching apparatus for electrode sheets according to the present invention and a method for notching electrode sheet using the same will be described with reference to the accompanying drawings.

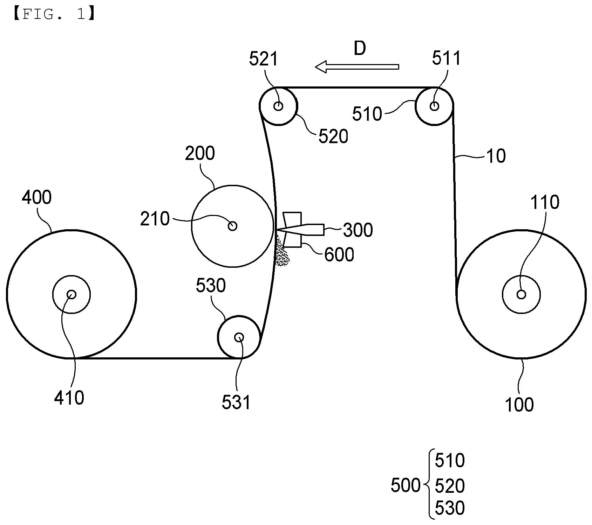

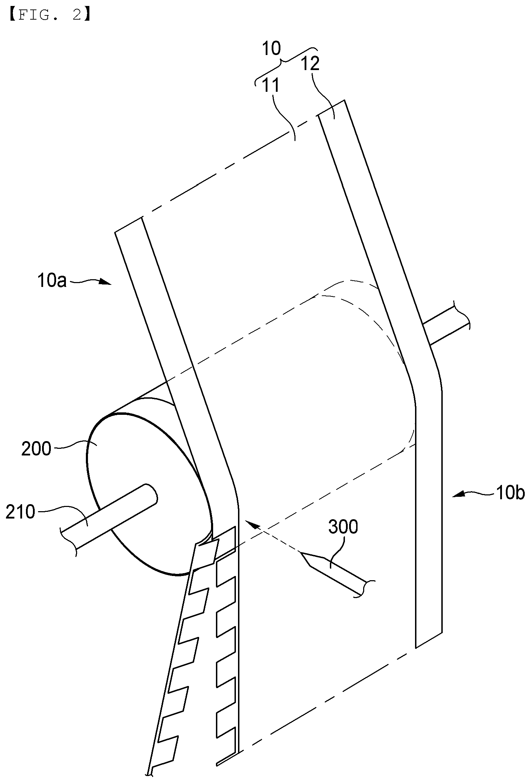

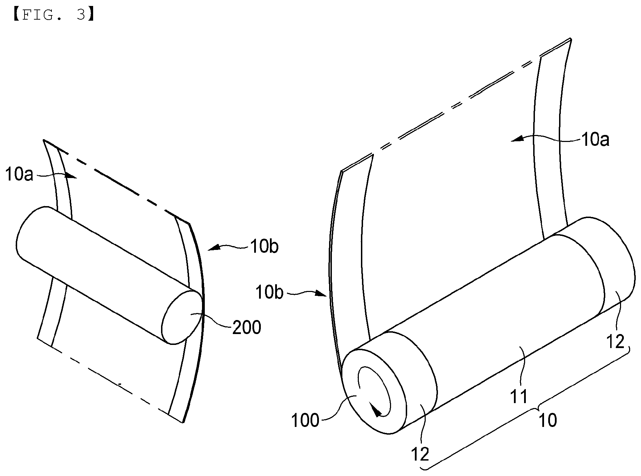

FIG. 1 is a sectional view of a laser notching apparatus for electrode sheets according to the present invention, FIG. 2 is an enlarged perspective view of a notching drum and a laser radiator in the laser notching apparatus for electrode sheets shown in FIG. 1, and FIG. 3 is a perspective view illustrating an electrode sheet facing an unwinder and the notching drum in the laser notching apparatus for electrode sheets shown in FIG. 1.

Referring to FIGs. 1 to 3, the laser notching apparatus for electrode sheets according to the present invention may include an unwinder 100, a notching drum 200, a laser radiator 300, a rewinder 400, a guide roller 500, and a fume box 600.

First, the unwinder 100 has an electrode sheet 10 with an active material applied wound therearound, and may be rotated in a direction of unwinding the electrode sheet 10 such that the electrode sheet 10 is transferred to the notching drum 200. Consequently, the electrode sheet 10 may be divided into a first surface 10a, which constitutes an inner surface, and a second surface 10b, which constitutes an outer surface, in a state of being wound around the unwinder 100.

The electrode sheet 10 may be a negative electrode sheet or a positive electrode sheet, and may include a coated portion 11 having an active material applied thereto and an uncoated portion 12 having no active material applied thereto.

The negative electrode sheet is manufactured by applying a slurry mixture of a negative electrode active material and a binder to a negative electrode current collector made of copper.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode sheet is manufactured by applying a slurry mixture of a positive electrode active material and a binder to a positive electrode current collector made of aluminum.

The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

Meanwhile, the current collector of the electrode sheet, e.g., the negative electrode current collector, may be electrolytic copper foil, wherein opposite surfaces of the electrode sheet 10, which is an electrolytic copper foil, are a shiny surface and a matte surface.

Consequently, the first surface 10a and the second surface 10b of the electrode sheet 10 according to the present invention may have different light reflectivities, and the light reflectivity of the second surface 10b may be lower than the light reflectivity of the first surface 10a. That is, the first surface 10a may be a shiny surface and the second surface 10b may be a matte surface.

Reference numeral 110 indicates a first rotary shaft configured to rotate the unwinder 100.

The notching drum 200, rotated by a second rotary shaft 210, is located spaced apart from the unwinder 100 by a predetermined distance, is configured to support the electrode sheet 10 that is notched, and is disposed so as to face the first surface 10a of the electrode sheet 10.

The laser radiator 300 is configured to notch the electrode sheet 10 passing through the notching drum 200, is disposed so as to face the second surface 10b, which does not face the notching drum 200, and is located between the unwinder 100 and the notching drum 200. That is, the notching drum 200 is located in front of the laser radiator 300 and the unwinder 100 is located behind the laser radiator 300.

During a notching process using the laser radiator 300, if a laser beam is radiated toward the first surface 10a, which is a shiny surface having high light reflectivity, the laser beam absorption rate may be reduced, whereby defects such as non-cutting may occur. In the present invention, therefore, a laser beam is radiated to the second surface 10b of the electrode sheet 10, which is a matte surface having low light reflectivity, whereby it is possible to prevent the above defects.

Meanwhile, the electrode sheet 10 undergoes an active material coating process, a drying process, and a rolling process, and is transferred and stored in a state of being wound around the unwinder 100, and therefore it is common for the electrode sheet 10 to have directionality with constant curvature.

In other words, in the electrode sheet 10 is wound around the unwinder 100, the electrode sheet 10 may be deformed such that the first surface 10a is slightly concave and the second surface 10b is slightly convex.

Consequently, it is preferable for the surface of the electrode sheet 10 facing the unwinder 100 and the surface of the electrode sheet facing the notching drum 200 to be the same surface, i.e., the first surface 10a. The reason for this is that, if the surface of the electrode sheet 10 facing the notching drum 200 is different from the surface of the electrode sheet facing the unwinder 100, the notching drum 200 and the electrode sheet 10 may not be properly in tight contact with each other due to the difference in curvature directionality, which may result in poor notch dimensions, tab folding, etc.

The rewinder 400 is configured to wind the notched electrode sheet 10, and a known driving means (not shown) configured to rotate a third rotary shaft 410, such as a motor, is connected to the rewinder 400.

The rewinder 400 is located spaced apart from the notching drum 200 by a predetermined distance. More specifically, it is preferable for the rewinder 400 to be located lower than the notching drum 200, and it is more preferable for the rewinder 400 to be located rearward of the rewinder 400. The reason for this is that it is possible to prevent contamination of the notched electrode sheet due to falling or scattering of debris generated during the notching process using the laser radiator 300.

Of course, the fume box 600 configured to remove debris generated during notching may be provided between the electrode sheet 10 and the laser radiator 300 or in the vicinity thereof, but since it is difficult to completely remove the generated debris by the fume box 600 alone, the rewinder 400 is preferably located under and rearward of the notching drum 200.

Next, the guide roller 500 configured to change the movement direction D of the supplied electrode sheet 10 will be described. The guide roller 500 may include a first guide roller 510, a second guide roller 520, and a third guide roller 530.

The first guide roller 510 and the second guide roller 520 may be located between the unwinder 100 and the notching drum 200, wherein the first guide roller 510 may be located closer to the unwinder 100 and the second guide roller 520 may be located closer to the notching drum 200.

The first guide roller 510 and the second guide roller 520 may be located higher than the unwinder 100 and the notching drum 200, and may change the movement direction D of the electrode sheet 10 that moves toward the notching drum 200. Specifically, the electrode sheet 10 may move upward to the first guide roller 510, may move horizontally from the first guide roller 510 to the second guide roller 520, and may move downward from the second guide roller 520 to the notching drum 200.

At this time, the first guide roller 510 and the second guide roller 520 may be disposed so as to face the second surface 10b of the electrode sheet 10. Consequently, the electrode sheet 10 wound around the unwinder 100 passes through the first guide roller 510 and the second guide roller 520 in the state in which the first surface is convex.

The third guide roller 530 is configured to change the movement direction D of the notched electrode sheet 10 such that the notched electrode sheet can be transferred to the rewinder 400. That is, it is preferable for the third guide roller 530 to be located under the notching drum 200 such that the notched electrode sheet 10 can be transferred to the rewinder 400, which is located under and rearward of the notching drum 200. In this case, the third guide roller 530 and the rewinder 400 face the first surface 10a of the notched electrode sheet 10.

Meanwhile, the first guide roller 510 and the third guide roller 530 perform the function of changing the movement direction D of the electrode sheet 10 and guiding a part of the electrode sheet 10 to be notched so as to be in tight contact with the notching drum 200.

Reference numeral 511 indicates a fourth rotary shaft for rotation of the first guide roller 510, reference numeral 521 indicates a fifth rotary shaft for rotation of the second guide roller 520, and reference numeral 531 indicates a sixth rotary shaft for rotation of the third guide roller 530.

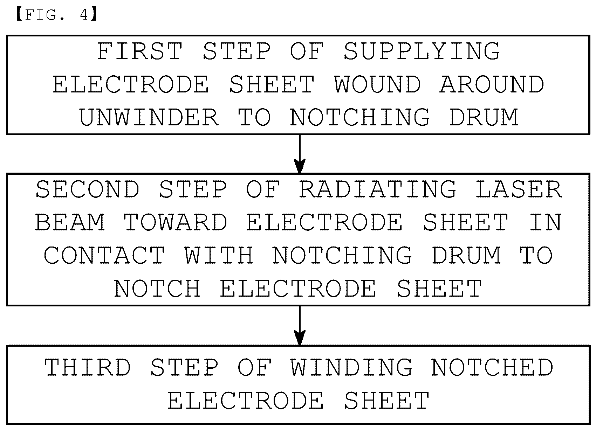

Next, a method for laser notching an electrode sheet using the laser notching apparatus for electrode sheets will be described. FIG. 4 is a flowchart of a method for notching electrode sheet according to the present invention.

Referring to FIGs. 1 to 4, the method for laser notching electrode sheets according to the present invention includes a first step of supplying an electrode sheet 10 wound around an unwinder 100 to a notching drum 200, a second step of radiating a laser beam toward the electrode sheet 10 in contact with the notching drum 200 to notch the electrode sheet 10, and a third step of winding the notched electrode sheet 10.

First, the first step is a step in which the electrode sheet 10 wound around the unwinder 10 is supplied to the notching drum 200 via at least one guide roller 500. More specifically, the electrode sheet 10 wound around the unwinder 10 is supplied to the notching drum 200 through a first movement direction change step using a first guide roller 510 and/or a second guide roller 520.

The electrode sheet 10 wound around the unwinder 100 includes a first surface 10a, which constitutes an inner surface, and a second surface 10b, which constitutes an outer surface, wherein the electrode sheet 10 is moved in the state in which the first guide roller 510 and the second guide roller 520 face the second surface 10b of the electrode sheet 10 and the notching drum 200 faces first surface 10a of the electrode sheet 10.

The second step is a step of removing a part of an uncoated portion 12 of the electrode sheet 10 by notching to form an electrode tab, wherein a laser radiator 300 radiates a laser beam toward the second surface 10b of the electrode sheet 10, at which light reflectivity of the electrode sheet 10 is relatively low. Since the laser beam is radiated toward the second surface 10b, which has a high laser beam absorption rate, processability of the electrode sheet is improved.

The notched electrode sheet 10 is moved rearward through a second movement direction change step using a third guide roller 530. At this time, the third guide roller 530 is located under the notching drum 200, and is rotated while facing the first surface 10a of the electrode sheet 10.

The third step is a step of rewinding the notched electrode sheet 10 using a rewinder 400, the electrode sheet 10 is wound in the state in which the first surface 10a faces the rewinder 400.

Those skilled in the art to which the present invention pertains will appreciate that various applications and modifications are possible within the category of the present invention based on the above description.

### (Description of Reference Symbols)

10: Electrode sheet
10a: First surface 10b: Second surface
11: Coated portion 12: Uncoated portion
100: Unwinder
110: First rotary shaft
200: Notching drum
210: Second rotary shaft
300: Laser radiator
400: Rewinder
410: Third rotary shaft
500: Guide roller
510: First guide roller 511: Fourth rotary shaft
520: Second guide roller 521: Fifth rotary shaft
530: Third guide roller 531: Sixth rotary shaft
600: Fume box
D: Movement direction

## Claims

1. A laser notching apparatus for electrode sheets, the laser notching apparatus comprising:
an unwinder having an electrode sheet wound therearound;
a notching drum spaced apart from the unwinder by a predetermined distance, the notching drum being configured to support the electrode sheet that is supplied;
a laser radiator configured to notch the electrode sheet; and
a rewinder spaced apart from the notching drum by a predetermined distance, the rewinder being configured to wind the notched electrode sheet,
wherein the electrode sheet wound around the unwinder comprises a first surface constituting an inner surface and a second surface constituting an outer surface, and
wherein the notching drum is disposed so as to face the first surface of the electrode sheet.

2. The laser notching apparatus according to claim 1, wherein the first surface and the second surface of the electrode sheet have different light reflectivities, and
wherein a light reflectivity of the second surface is lower than a light reflectivity of the first surface.

3. The laser notching apparatus according to claim 1, wherein the laser radiator is located between the unwinder and the notching drum.

4. The laser notching apparatus according to claim 1, further comprising:
a guide roller configured to change a movement direction of the supplied electrode sheet,
wherein the guide roller comprises a first guide roller and a second guide roller, and
wherein the first and second guide rollers are located between the unwinder and the notching drum.

5. The laser notching apparatus according to claim 4, wherein the first guide roller and the second guide roller are located higher than the unwinder and the notching drum.

6. The laser notching apparatus according to claim 5, wherein the first guide roller and the second guide roller face the second surface of the electrode sheet.

7. The laser notching apparatus according to claim 4, wherein the guide roller comprises a third guide roller located under the notching drum.

8. The laser notching apparatus according to claim 7, wherein the rewinder is located behind the third guide roller.

9. The laser notching apparatus according to claim 8, wherein the third guide roller faces the first surface of the electrode sheet.

10. A method for laser notching electrode sheets, the method comprising:
a first step of supplying an electrode sheet wound around an unwinder to a notching drum;
a second step of radiating a laser beam toward the electrode sheet in contact with the notching drum to notch the electrode sheet; and
a third step of winding the notched electrode sheet,
wherein the electrode sheet wound around the unwinder comprises a first surface constituting an inner surface and a second surface constituting an outer surface, and
wherein the notching drum faces the first surface of the electrode sheet.

11. The method according to claim 10, wherein in the second step, the laser beam is radiated toward the second surface of the electrode sheet, and
wherein the first surface and the second surface of the electrode sheet have different light reflectivities, a light reflectivity of the second surface being lower than a light reflectivity of the first surface.

12. The method according to claim 10, further comprising:
a first movement direction change step of changing a movement direction of the supplied electrode sheet between the first step and the second step,
wherein the first movement direction change step is performed by a first guide roller and a second guide roller located between the unwinder and the notching drum, and
wherein the first guide roller and the second guide roller are rotated so as to face the second surface of the electrode sheet.

13. The method according to claim 10, further comprising:
a second movement direction change step of changing a movement direction of the notched electrode sheet between the second step and the third step,
wherein the second movement direction change step is performed by a third guide roller located behind the notching drum, and
wherein the third guide roller is rotated so as to face the first surface of the electrode sheet.
